# EUROPÄISCHE PATENTANMELDUNG

(11) **EP 0 697 300 A1**
(43) Veröffentlichungstag der Anmeldung: **21.02.1996**
(21) Anmeldenummer: 95109666.8
(22) Anmeldetag: 22.06.1995
(51) Int. Cl.: B60K 7/00, A61G 5/04

(54) **Kleinfahrzeug mit mindestens einem Antriebslaufrad mit Nabenmotor**

(30) Priorität: 17.08.1994 DE 4429153
(71) Anmelder: Ulrich Alber GmbH, D-72458 Albstadt (DE)
(72) Erfinder: Alber, Ulrich, D-72475 Bitz (DE)
(74) Vertreter: Möbus, Rudolf, Dipl.-Ing.

(57) **Zusammenfassung**

Bei einem Kleinfahrzeug ist das mindestens eine, durch einen elektrischen Nabenmotor (12) angetriebene Antriebslaufrad (13) im Bereich seiner Radnabe (16) von dem Nabenmotor (12) lösbar ausgebildet, wobei die Verbindung des Antriebslaufrades (13) mit seinem Nabenmotor (12) mittels Schnellöse-Kupplungsorganen bewirkt sein kann.

## Beschreibung

Die Erfindung betrifft ein Kleinfahrzeug mit mindestens einem mittels eines im Bereich der Radnabe angeordneten Elektromotors angetriebenen Antriebslaufrad.

Es ist bereits vorgeschlagen worden, bei Kleinfahrzeugen mit mittels Nabenmotoren betriebener Antriebslaufräder die Antriebslaufräder zusammen mit dem Nabenmotor leicht lösbar vom Fahrgestell auszubilden (DE 41 27 257 C). Die Nabenmotoren bilden bei den Antriebslaufrädern einen wesentlichen Gewichtsanteil, was sich bei Kleinfahrzeugen, beispielsweise Rollstühlen, die üblicherweise etwa zur Erneuerung der Bereifung nicht als Ganzes in eine Reparaturwerkstätte verbracht werden, als negativ empfunden wird. Außerdem können die Nabenmotoren Reparaturen im Laufkranzbereich der Antriebslaufräder behindern, und auch für die Nabenmotoren kann die Gefahr bestehen, daß sie bei solchen Reparaturarbeiten ungewollt Beschädigungen erleiden.

Der Erfindung liegt daher die Aufgabe zugrunde, Kleinfahrzeuge der eingangs genannten Art so auszubilden, daß ihre angetriebenen Laufräder zusätzlich in Einzelteile zerlegbar sind.

Die gestellte Aufgabe wird erfindungsgemäß dadurch gelöst, daß das angetriebene Rad mit seinem die Lauffläche aufweisenden Teil von dem Nabenmotor und/oder einem mit dem Nabenmotor koppelbaren Abtriebsteil lösbar ausgebildet ist.

Bei einem erfindungsgemäß ausgebildeten Kleinfahrzeug ist es möglich, zur Erneuerung der Lauffläche des Rades oder zur Reparatur des Laufkranzes den Laufkranz samt Radnabe von dem Nabenmotor oder einem von dem Nabenmotor angetriebenen Abtriebskörper zu lösen. Dies ist vor allem bei Rollstühlen vorteilhaft, die nicht mit einer leicht auswechsclbaren Luftbereifung versehen sind, sondern deren Laufräder zur Erneuerung der Lauffläche in eine Spezialwerkstätte verbracht werden müssen. Gemäß der Erfindung kann in einem solchen Falle der Nabenmotor am Fahrzeugkörper oder Fahrgestell verbleiben.

Bei einem erfindungsgemäß ausgebildeten Kleinfahrzeug kann der Nabenmotor vorteilhafterweise in einem mit dem Fahrzeug auch starr verbindbaren und die Drehachse des Rades bestimmenden zylindrischen Gehäuse angeordnet sein, das auf seiner freien Stirnseite einen mit dem Rotor des Nabenmotors antriebsmäßig gekoppelten, zur Radachse konzentrischen Abtriebskörper aufweist, mit welchem die Radnabe des angetriebenen Laufrades mittels lösbarer Kupplungsorgane verbunden ist. Die Kupplungsorgane können als Schnellkupplungsorgane ausgebildet sein und zweckmäßig aus mehreren, gleichmäßig über den Umfang der Radnabe verteilt angeordneten, an ihr gelagerten und an dem Abtriebskörper lösbar angreifenden Riegelelementen bestehen. Bei einem vorteilhaften Ausführungsbeispiel können die Kupplungsorgane aus in einem Flansch der Radnabe gelagerten Schwenkhebeln bestehen, die an einem freien Hebelende einen in Schließrichtung federbelasteten und in eine einen hinterschnittenen Rand aufweisende Aufnahmeöffnung des Abtriebskörpers des Nabenmotors passenden Riegel tragen, der von Hand lösbar ist. Die Kupplungsorgane können aber auch in anderer Weise gestaltet sein. Zweckmäßig kann bei einem erfindungsgemäß ausgebildeten Antriebslaufrad der Abtriebskörper eine die lösbar aufgesetzte Radnabe zentrierende Scheibe bilden, die in ihrem die Nabe kontaktierenden Bereich mit federnden Dichtungsringen besetzt sein kann.

Nachfolgend wird ein Ausführungsbeispiel eines für einen Rollstuhl bestimmten Antriebslaufrades mit Nabenmotor anhand der beiliegenden Zeichnung näher erläutert.

Im einzelnen zeigen:
- Fig. 1: eine Ansicht des Antriebslaufrades in Fahrtrichtung des Rollstuhles in fahrbereitem Zustand;
- Fig. 2: das Antriebslaufrad nach Fig. 1 in vom Fahrgestell des Rollstuhls und von seinem Nabenantriebsmotor abgenommenem Zustand;
- Fig. 3: eine Draufsicht auf die Nabe des Antriebslaufrades in montiertem Zustand und in Richtung des Pfeiles III in Fig. 1 in gegenüber Fig. 1 vergrößertem Maßstab;
- Fig. 4: einen Querschnitt entlang der Linie IV - IV in Fig. 3 durch die Nabe des Antriebslaufrades in gegenüber Fig. 3 vergrößertem Maßstab;
- Fig. 5a - 5c: einen Schnitt entlang der Linie V - V in Fig. 3 im Bereich eines der zur lösbaren Befestigung der Radnabe vorgesehenen Kupplungsorgane in drei verschiedenen Stellungen während des Lösevorganges.

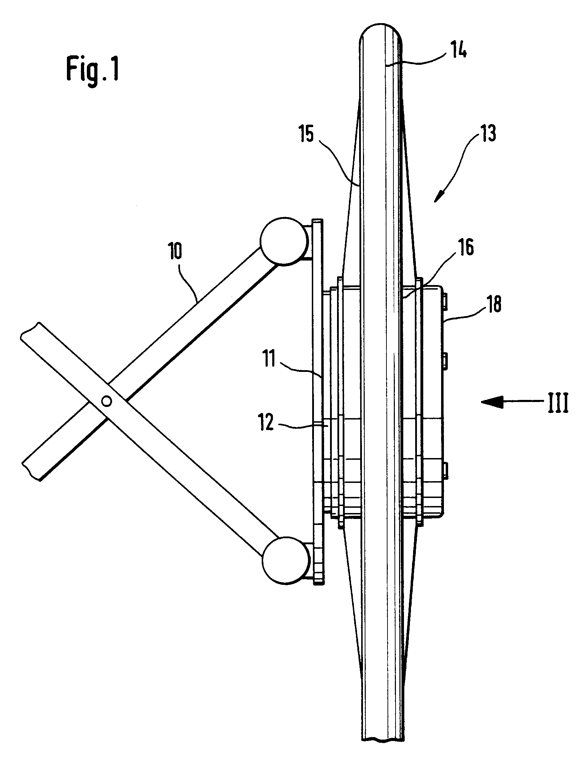

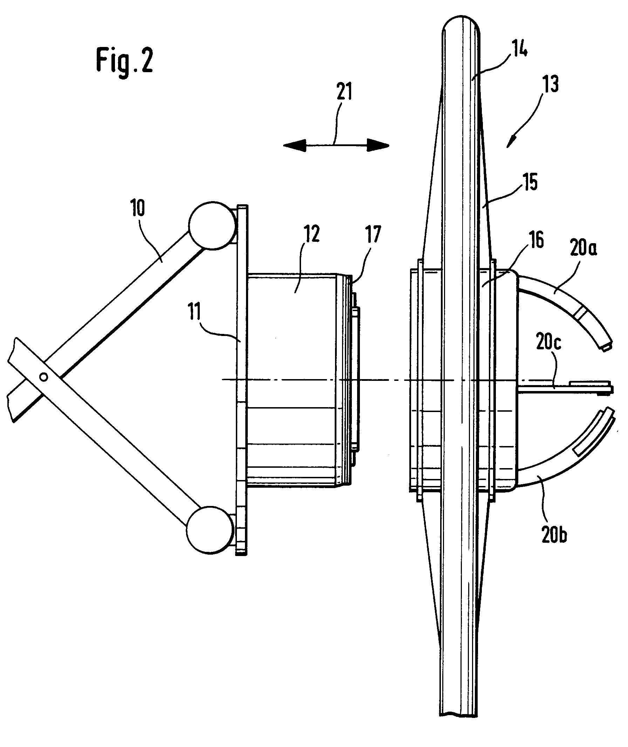

Die Fig. 1 und 2 zeigen einen Teil des zusammenfaltbaren Gestelles 10 eines Rollstuhles mit einer Platte 11 für das zylindrische Gehäuse eines elektrischen Nabenmotors 12 für eines von zwei Antriebslaufrädern 13 des Rollstuhles. Das Antriebslaufrad ist in bekannter Weise ein Speichenrad mit einem die Lauffläche bildenden Laufring 14, der über einen Speichenkranz 15 mit einer Radnabe 16 verbunden ist. Das Antriebslaufrad 13 ist gemäß Fig. 1 mit seiner Nabe 16 über das zylindrische Gehäuse des Nabenmotors 12 geschoben. der Nabenmotor kann einen aus der DE 41 27 257 C bekannten Aufbau im Innern seines zylindrischen Gehäuses haben und weist bei dem dargestellten Ausführungbeispiel einen auf der freien Stirnseite des zylindrischen Motorgehäuses freiliegenden Abtriebskörper in Form einer zum Motorgehäuse koaxialen Abtriebsscheibe 17 auf (Fig. 2).

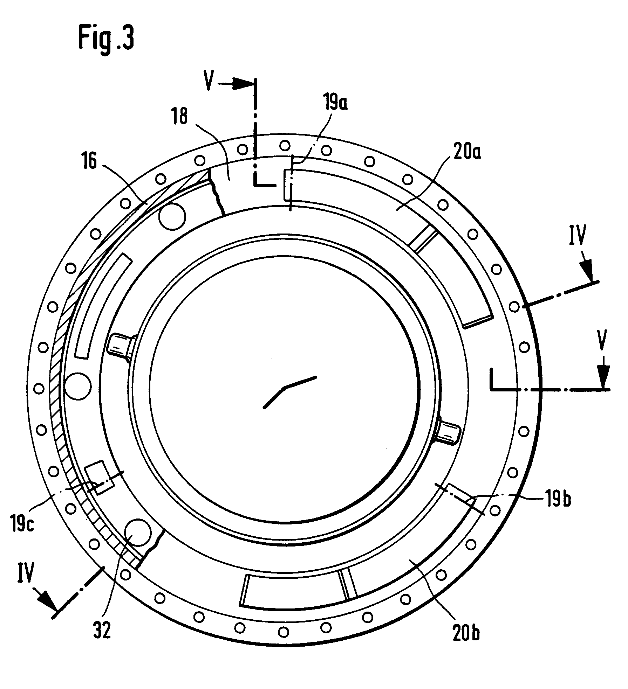

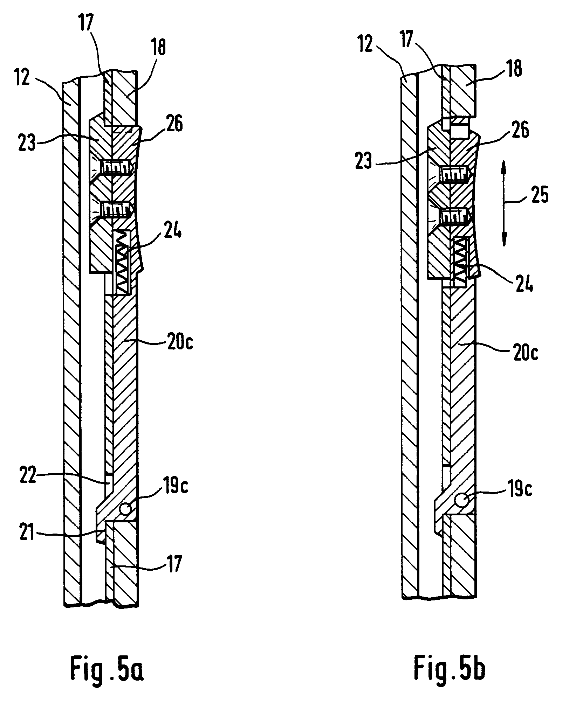

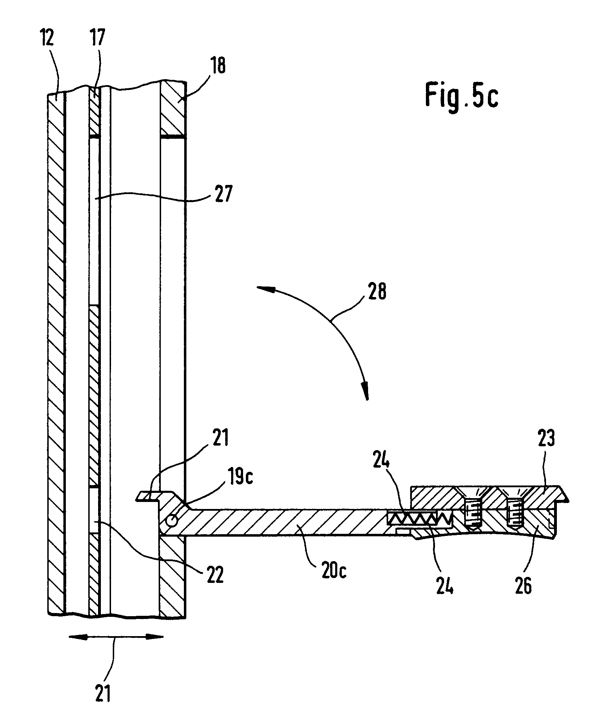

Während bei einer Laufradkonstruktion gemäß der erwähnten DE 41 27 257 C die Radnabe mit dem Läufer des Nabenmotors fest verbunden ist, ist bei dem dargestellten Ausführungsbeispiel die Radnabe 16 mit dem scheibenförmigen Abtriebskörper 17 des Nabenmotors 12 lösbar verbunden. Zu diesem Zweck weist die Radnabe 16 gemäß Fig. 3 auf ihrer äußeren Stirnseite einen einwärts gerichteten Flansch 18 auf, in welchem um in Fig. 3 mit dicken strichpunktierten Achslinien angedeutete Radialachsen 19a, 19b, 19c drei gleichmäßig über den Umfang des Flansches 18 verteilte Kupplungsorgane in Form von gekrümmten Schwenkhebeln 20a, 20b und 20c gelagert sind (Fig. 2, 3, 5a - 5c). Fig. 2 zeigt die drei Kupplungsorgane 20a - 20c in ausgeschwenktem Zustand und damit in einer Lösestellung, in welcher sich das Laufrad 13 von dem Abtriebskörper 17 des Nabenmotors 12 lösen läßt, wie durch einen Doppelpfeil 21 symbolisiert ist. Wie die Fig. 5a - 5c am Beispiel des Schwenkhebels 20c zeigen, weisen diese Schnellkupplungsorgane im Bereich ihrer Schwenkachse 19c eine Spannase 21 auf, die in ein Fenster 22 der Abtriebsscheibe 17 des Nabenmotors 12 eintaucht und in der Verriegelungsstellung die Abtriebsscheibe 17 hintergreift. An dem anderen Ende des Schwenkarmes 20c ist ein Schieberiegel 23 gegen die Kraft einer Rückstellfeder 24 in Richtung des in Fig. 5b eingezeichneten Doppelpfeiles 25 verschiebbar gelagert. Das Verschieben des Schieberiegels 23 erfolgt an einer mit dem Schieberiegel fest verbundenen Grifftaste 26. Für jeden der drei Schieberiegel 23 der Schnellkupplungsanordnung weist die Abtriebsscheibe 17 ein in Fig. 5c bezeichnetes Fenster 27 auf.

Fig. 5a zeigt den Schwenkhebel 20c in seiner Riegelstellung, in welcher der Schieberiegel 23 unter der Kraft der Feder 24 den Rand des Fensters 27 der Abtriebsscheibe 17 des Nabenmotors 12 hintergreift und somit das Antriebslaufrad 13 in seiner aus Fig. 1 ersichtlichen Laufstellung sichert. Zusätzlich hintergreift die Spannase 21 den Rand des Fensters 22 der Abtriebsscheibe 17.

Fig. 5b zeigt das Lösen des Kupplungsorganes. Der Riegelschieber 23 wird an der Grifftaste 26 in Fig. 5b nach unten gegen die Kraft der Rückstellfeder 24 geschoben, so daß die Riegelnase des Schieberiegels 23 den Rand des Fensters 27 freigibt und damit der Schwenkhebel 20c in die aus Fig. 5c ersichtliche Stellung ausgeschwenkt werden kann, was durch einen Doppelpfeil 28 symbolisiert ist. Wenn alle drei Schwenkhebel 20a, 20b, 20c auf diese Weise ausgeschwenkt worden sind, läßt sich die Nabe 16 und damit das Antriebslaufrad 13 von seinem Nabenmotor 12 lösen, was wiederum durch einen Doppelpfeil 21 wie in Fig. 2 symbolisiert ist.

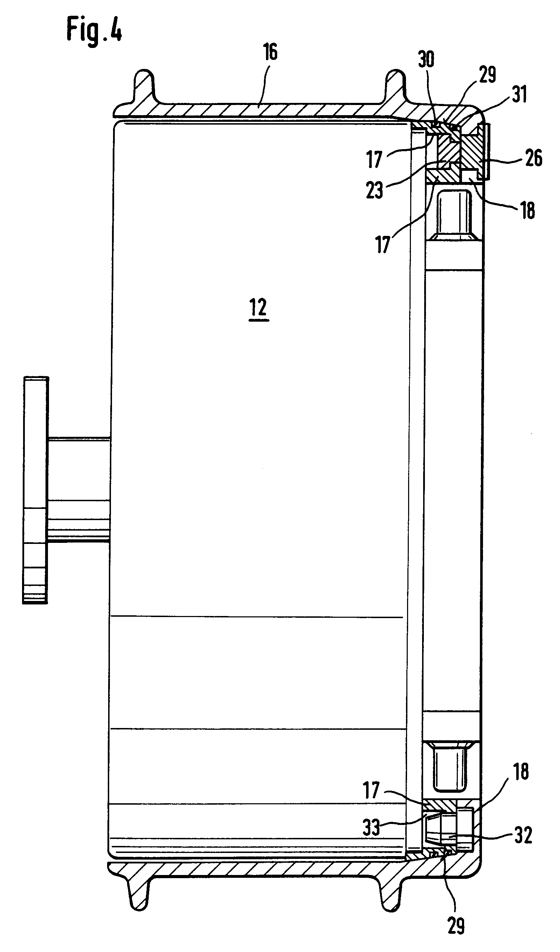

Das Schnittbild der Fig. 4 zeigt, wie die Nabe 16 das zylindrische Gehäuse des Nabenmotors 12 übergreift. Um eine konzentrische Anordnung der Nabe 16 zu dem Gehäuse des Nabenmotors 12 und eine entsprechend konzentrische Anlage des Nabenflansches 18 an der Abtriebsscheibe 17 des Nabenmotors 12 zu gewährleisten, ist die Radnabe 16 innenseitig in dem Übergangsbereich 29 zu dem Flansch 18 konisch gestaltet. Außerdem ist die Abtriebsscheibe 17 an ihrem Außenrand mit zwei elastischen Umfangsringen 30 und 31 versehen, die bei angekuppeltem Antriebslaufrad gegen den konischen Bereich 29 der Nabe 16 zur Anlage gelangen. In Fig. 4 ist im unteren Schnittbereich zusätzlich ein in dem Flansch 18 verankerter Mitnehmerzapfen 32 dargestellt, der in eine passende Ausnehmung 33 der Abtriebsscheibe 17 ragt von denen mehrere über den Umfang des Flansches 18 verteilt angeordnet sein können.

## Patentansprüche

1. Kleinfahrzeug mit mindestens einem mittels eines im Bereich der Radnabe (16) angeordneten elektrischen Nabenmotors (12) angetriebenen Antriebslaufrad (13), dadurch gekennzeichnet, daß das Antriebslaufrad (13) mit seinem die Lauffläche aufweisenden Teil (14/15) und mit der Radnabe (16) von dem Nabenmotor (12) oder einem mit dem Nabenmotor koppelbaren Abtriebsteil (17) lösbar ausgebildet ist.

2. Kleinfahrzeug nach Anspruch 1, dadurch gekennzeichnet, daß der Nabenmotor (12) in einem mit dem Fahrzeug starr verbindbaren und die Drehachse des Antriebslaufrades (13) bestimmenden zylindrischen Gehäuse angeordnet ist, das auf seiner freien Stirnseite einen mit dem Rotor des Nabenmotors (12) antriebsmäßig gekoppelten, zur Radachse konzentrischen Abtriebskörper (17) aufweist, mit welchem die Radnabe (16) mittels lösbarer Kupplungsorgane (20a - 20c) verbunden ist.

3. Kleinfahrzeug nach Anspruch 1 und 2, dadurch gekennzeichnet, daß die Kupplungsorgane aus mehreren gleichmäßig über den Umfang der Radnabe (16) verteilt angeordneten, an ihr gelagerten und an dem Abtriebskörper (17) lösbar angreifenden Riegelelementen (20/23) bestehen.

4. Kleinfahrzeug nach einem der Ansprüche 1 bis 3, dadurch gekennzeichnet, daß die Radnabe (16) das den Nabenmotor und den Abtriebskörper (17) aufweisende oder lagernde zylindrische Gehäuse konzentrisch übergreift und daß die Kupplungsorgane für die lösbare Verbindung in einem dem Abtriebskörper (17) zugewandten Flansch (18) der Radnabe (16) gelagert sind.

5. Kleinfahrzeug nach Anspruch 4, dadurch gekennzeichnet, daß die Kupplungsorgane aus in dem Flansch (18) gelagerten Schwenkhebeln (20a - 20c) bestehen, die an einem freien Hebelende einen in Schließrichtung federbelasteten und in ein einen hinterschnittenen Rand aufweisendes Fenster (27) des Abtriebskörpers (17) passenden Riegel (23) tragen, der von Hand (Handgriff 26) lösbar ist.

6. Kleinfahrzeug nach Anspruch 4 und 5, dadurch gekennzeichnet, daß die Schwenkhebel (20a - 20c) konzentrisch zur Radachse gekrümmt ausgebildet sind und ihre Schwenkachse (19a - 19c) radial zur Radachse und zu dem Flansch (18) der Radenabe (16) verläuft.

7. Kleinfahrzeug nach einem der Ansprüche 1 bis 6, dadurch gekennzeichnet, daß der Abtriebskörper eine die lösbar aufgesetzte Radnabe (16) zentrierende Abtriebsscheibe (17) bildet, die in ihrem die Radnabe (16) kontaktierenden Bereich mit federnden Umfangsringen (30, 31) besetzt ist.

8. Kleinfahrzeug nach Anspruch 7, dadurch gekennzeichnet, daß die Radnabe (16) in ihrem Anlagebereich für die Umfangsringe (30, 31) der Abtriebsscheibe (17) einen konischen Zentrierbereich (29) aufweist.
